# EUROPEAN PATENT SPECIFICATION

(11) **EP 2 798 692 B1**
(45) Date of publication and mention of the grant of the patent: **10.05.2017**
(21) Application number: 11813888.2
(22) Date of filing: 02.12.2011
(51) Int. Cl.: H01M 10/625, H01M 10/633, H01M 10/6555, H01M 10/48, H01M 10/615, B60L 1/02, B60L 11/18, H01M 10/0525, H01M 4/58, H01M 10/6571, H01M 10/658

(54) **SYSTEM AND PROCESS FOR MANTAINING OF WORKING TEMPERATURE OF BATTERY CELLS FOR STARTER ACCUMULATORS IN VEHICLES**
SYSTEM UND VERFAHREN ZUR AUFRECHTERHALTUNG DER ARBEITSTEMPERATUR VON BATTERIEZELLEN FÜR ANLASSERAKKUMULATOREN IN FAHRZEUGEN
SYSTÈME ET PROCÉDÉ DE MAINTIEN DE LA TEMPÉRATURE DE TRAVAIL DE CELLULES DE BATTERIE POUR DES BATTERIES DE DÉMARREUR DANS DES VÉHICULES

(43) Date of publication of application: 05.11.2014
(73) Proprietor: Rimac Automobil D.O.O., 10431 Sveta Nedjelja (HR)
(72) Inventor: RIMAC, Mate, HR-10431 Sveta Nedjelja (HR)
(74) Representative: Sucic, Tatjana
(86) International application number: PCT/HR2011/000045
(87) International publication number: WO 2013/079983

(56) References cited:
- EP-A2- 1 333 521
- WO-A1-99/31752
- US-A1- 2005 218 136
- US-A1- 2008 213 652
- US-B1- 6 392 388

## Description

### Technical field

The subject of this Invention is a battery management system (BMS) and a process designed to maintain a cell working temperature in a vehicle starter batteries, especially the cells of lithium-ion; lithium-iron-phosphate 12/24V starter battery cells.

### Technical problem

The lead batteries being used in automobiles weigh between 12 and 25 kg depending on the model. By replacing the lead batteries with a lithium batteries the weight would be greatly reduced and an improved product picture obtained in terms of environmental protection.

Due to its large mass and toxic ingredients, lead batteries are not considered a long-term solution for starting automobiles, trucks, other vehicles and products from similar areas of application. The subject of this Invention is the application of 12 V batteries with systems that maintain optimum conditions for battery operation, featuring many advantages over the conventional lead battery, able to largely eliminate the shortcomings of the conventional battery in respect of bulky mass and toxic ingredients.

Lithium-iron-phosphate is a compound thinly applied to the anode and cathode layers of lithium-iron-phosphate battery cells. Such cells have proved to be the best choice for the 12V battery owing to a high degree of safety compared with other technologies (e.g., lithium-polymer or lithium-ion), long life (over 2000 charge/discharge cycles up to 80% capacity) and a relatively acceptable price per unit of stored energy.

However, tests have shown that at temperatures from 5 to 0 °C and lower a major fall in power potential (capability to give big currents without a big voltage drop) occurs. The technical problem being solved with the Invention is to maintain optimum conditions for the battery's operation, to keep the working temperature of battery cells if ambient temperature is too low for their functioning. This problem is solved in two possible ways: by having each cell of the battery pack in a direct contact with a heater or by providing a common heater for the whole battery pack, where heating is activated if required.

### Prior art

Porsche, the only car manufacturer to launch the 12V Li-ion starter battery, offers its own Li-ion battery as a very easy alternative to the conventional lead battery, with a note that it operates only above zero (0 °C). This battery now serves as racing equipment, for roadtrack races, anyway not for everyday use. With the Li-ion battery the manufacturer also supplies the conventional lead battery for everyday use.

There is likewise no 12V Li-ion battery with active thermal management that maintains the working temperature of cells if ambient temperature is too low for their functioning. This shortcoming confines the operation of the 12V Li-ion batteries exclusively to a range above zero temperatures and thus does not provide safety and reliability for replacing the conventional battery.

Prior art document EP1333521 (A2) [SANYO ELECTRIC CO, JP] published on 6 August 2003 relates to a battery apparatus for driving a motor that drives a vehicle such as automobile, and more particularly to a battery apparatus including a temperature sensor for detecting the temperature of the battery. The battery apparatus includes a plurality of secondary batteries 20, a casing 10 accommodating the secondary batteries 20, and a temperature detecting plate 30 fixed outside the casing 10, and connecting temperature sensors 50 for detecting temperatures of the secondary batteries 20 accommodated in the casing 10. The temperature detecting plate 30 fixes the plurality of heaters 40 to the insulation substrate 31 in the condition that they are connected in serial. The heater 40 is an electronic component such as resistance, semiconductor and PTC that generates heat upon energization. The temperature detecting plate 30 energizes the heater 40 to heat each of the heaters 40 by Joule heat, and heats the secondary batteries 20 by the heat generated by the heaters 40.

Further, document US2005218136 (A1) [SANYO ELECTRIC CO., LTD] published on 06 October 2005 discloses a car power source apparatus provided with a car driving battery, a heater which heats the driving battery, a control circuit which controls power to the heater, and a temperature sensor to detect battery temperature and issue a detected temperature signal to the control circuit. The control circuit is provided with a timer which stores a warming-time to maintain the driving battery in a warmed-up condition via the heater after the car ignition switch has been turned off. The control of the battery temperature with a warming time to maintain the driving battery in a warmed-up condition via a heater after the car ignition switch has been turned-off.

Document US2008213652 (A1) [SCHEUCHER KARL FREDERICK] published 4 September 2008 discloses a process of controlling the temperature of a battery pack that includes the steps of determining the operating mode and present temperature of the battery pack, where an optimal temperature for the battery pack depends on the operating mode and the difference between the present temperature and the previously identified optimal temperature. The battery pack is warmed if the temperature difference (measured minus optimal) is large.

Document US6392388 (B1) [FORD GLOBAL TECH INC] published on 21 May 2002 discloses a method of heating a starter battery in cold environment by controlling the charge condition of the battery and its internal temperature.

### Description of the Invention

In order to avoid the low temperature problems encountered by similar systems, we have introduced heating of battery cells to ensure unhindered work throughout the year and in all conditions.

Cell heating can be achieved in two ways, depending on the kind of application:
1. Each cell is in a direct contact with a heater (foil) which gets activated if required;
2. A heater is shared by the whole battery pack.

A temperature sensor is mounted directly on one of the cells and measures its temperature.

As the battery cell largely consists of metal (aluminium and copper), temperature is evenly distributed over the whole cell.

Our tests have shown that a sharp fall in energy potential (capability to generate big currents without a big voltage drop) occurs at temperatures from 0 do 5 °C and below. The program is so adjusted that the heaters are turned on when temperature falls below 0 °C and turned off when the cell temperature reaches 5 °C. The ON/OFF parameters and algorithms of heating can be adjusted as desired, depending on ideal conditions of the used cell. In order to keep temperature high as long as possible, it is advisable to isolate the cells. It is also possible to fill the whole box (all cavities) with isolation foam. Since in heating the cells energy is used from the cells themselves, isolation is vital to ensure that energy is not be spent on heating, thus preventing the user to use the battery - e.g., automobile ignition.

There is a possibility of installing an algorithm which disables the heating function if the battery is not used for several days (the BMS is monitoring voltage development and records that for X days no voltage increase has taken place).

It is also possible to manually deactivate or activate heating by depressing the push-button on the box of the battery pack.

### Brief description of drawings

The Invention will be described below in detail with reference made to the following drawings:

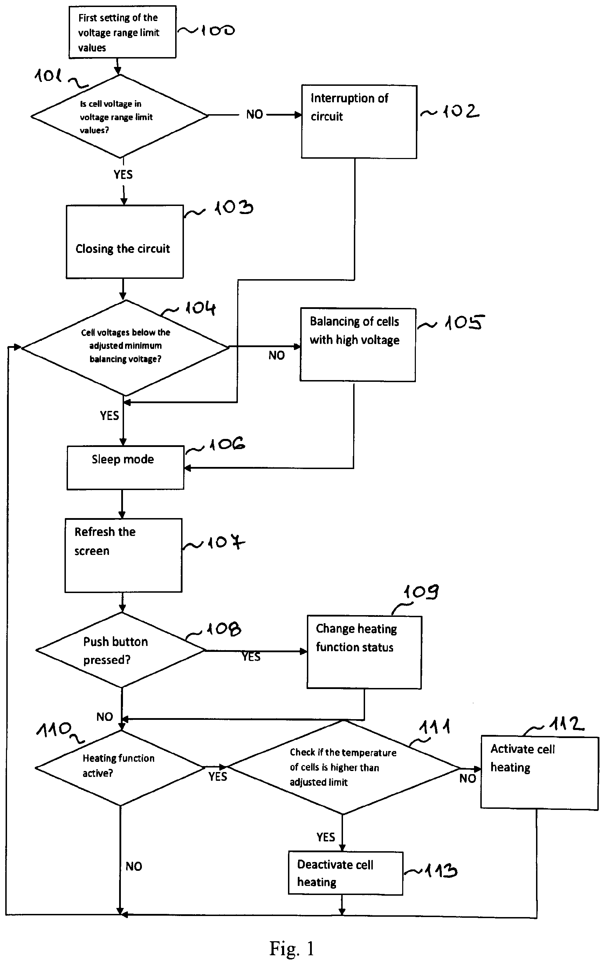

Fig. 1 - BMS software - operating diagram,
Fig. 2 - appearance of a completed battery pack with a casing,
Fig. 3 - battery pack - cross-section showing the main components inside the casing,
Fig. 4 - view of the battery pack cover and the parts arranged on the upper side,
Fig. 5 - front view of the battery pack,
Fig. 6 - front view with a transparent casing to show the components inside,
Fig. 7 - 3D-view of the main components of the battery pack without the casing,
Fig. 8 - side view of the battery pack with a transparent casing,
Fig. 9 - battery pack cross-section with all the components inside,

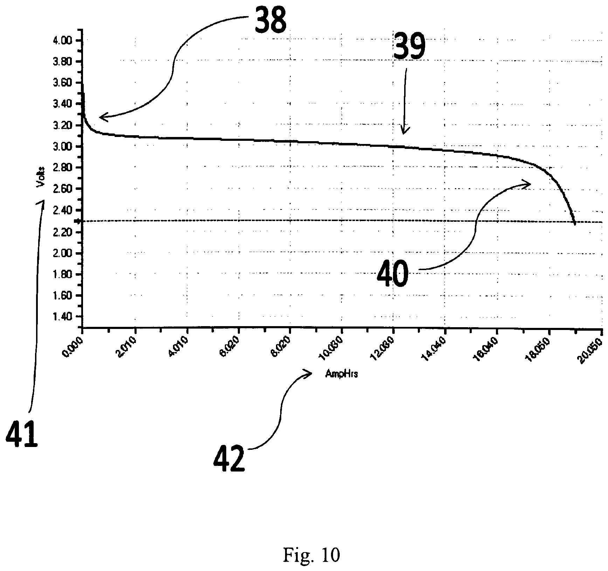

Fig. 10 - characteristic of lithium-iron-phosphate batteries (ratio between voltage and charge status),
Fig. 11 - screen, and
Fig. 12 - example of a battery pack with flat cells.

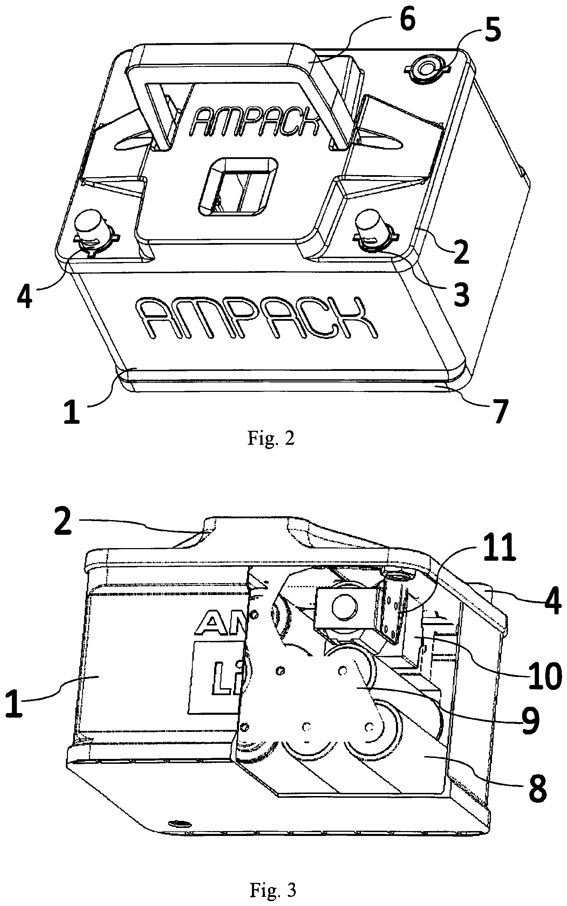

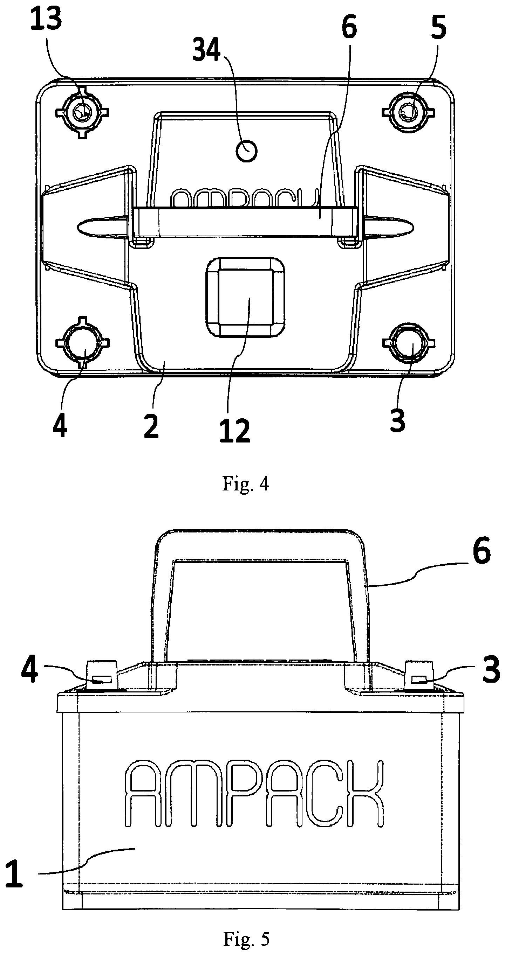

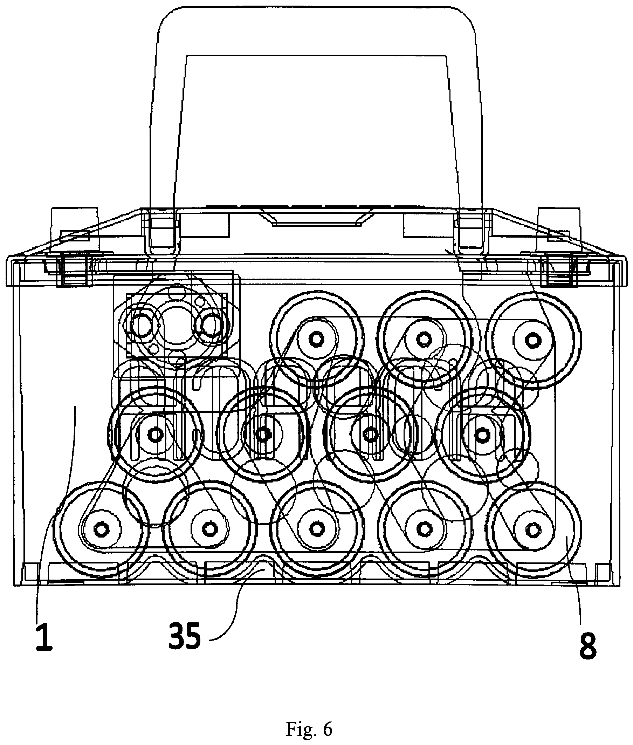

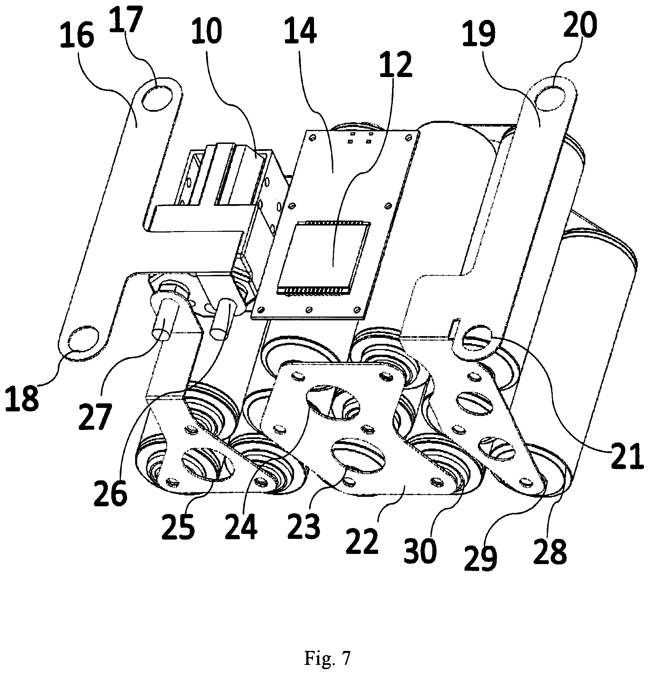

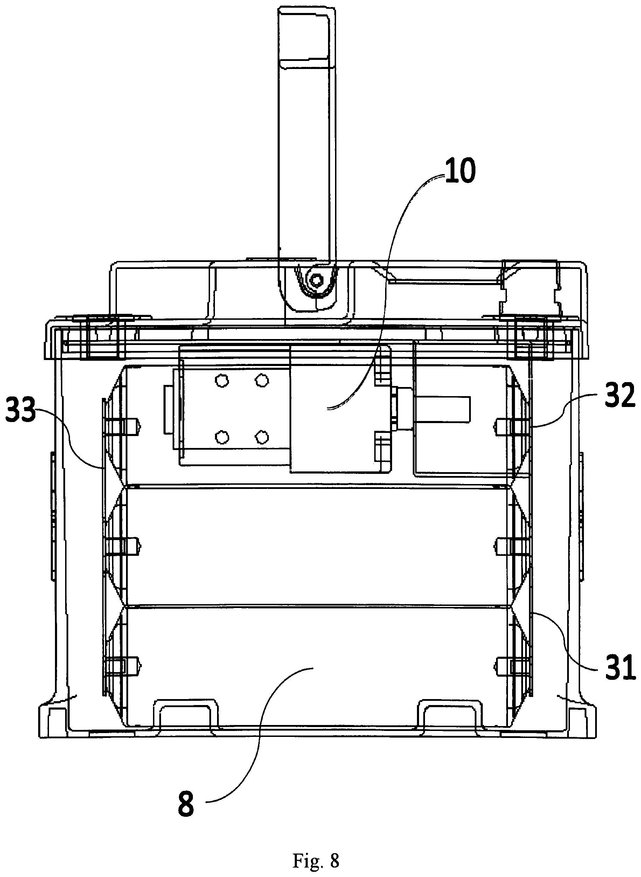

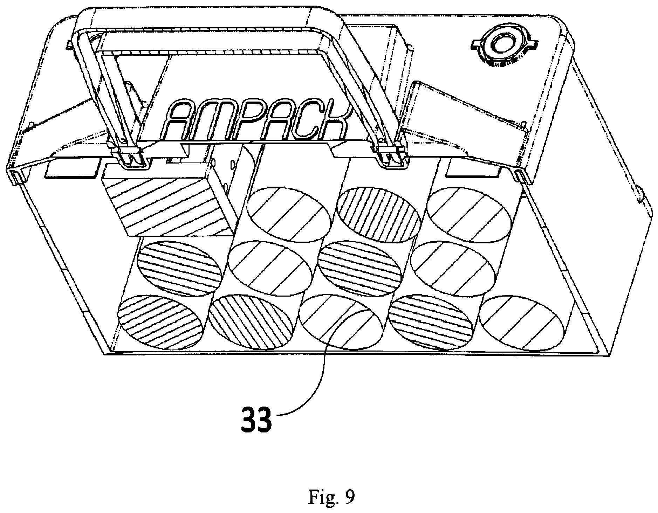

Figures 2 through 9 show a battery pack elements. A casing (1) and a cover (2) contain all the essential components of the battery pack. Visible on the outside are a casing handles (6), terminals (3, 4), terminal threads (5, 13, 17, 18, 20, 21), a push-button (34) and a LCD screen (12).

The casing shown in Figures 2, 4 and 5 corresponds in height and width to standard casings for lead batteries, which allows a broad application of the battery pack without a need for car modifications. The terminals (3, 4) can be connected from either side of the battery pack to required places, so that the battery could be used in automobiles with differently positioned battery clamps.

A butt (7) at the bottom of the casing serves to receive the battery pack in the car to hold faster in place.

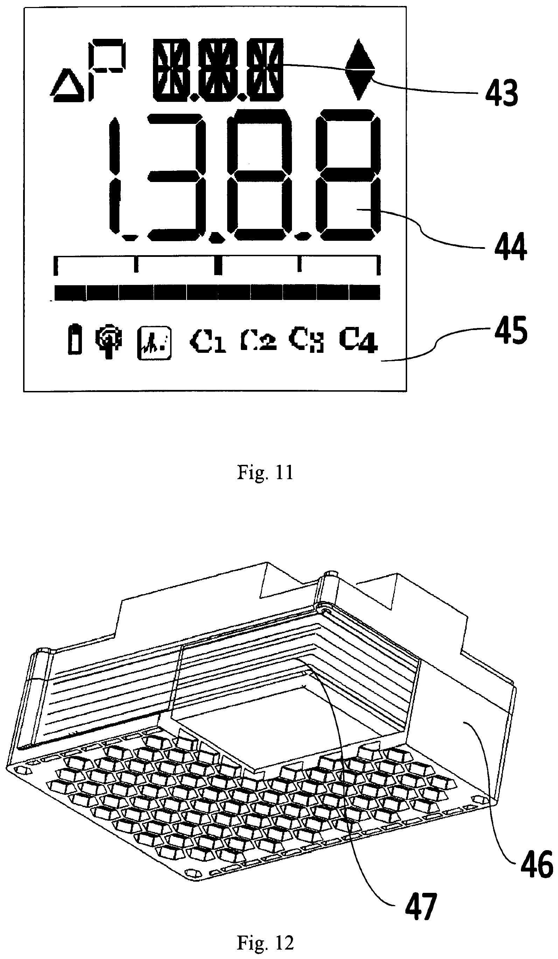

Within the casing (1) are the battery cells (8). Depending on the cell type, capacity and area of application, there can be more or less of the cells. The more cells are series-connected, the higher voltage is obtained, the more of them are parallel-connected, the higher capacity is obtained. Figures 3, 6, 7, 8 and 9 show an example where the cylindrical cells in a configuration 4 series-, 3 parallel-connected are used. Physically they are held in place by the holders (35) inside the casing, a metal plates (22, 19, 31, 33), which also serve for electrical connection, and extra holders. When four battery cells (8) of this type are series-connected, the voltage obtained is similar to that of the conventional 12V lead batteries. For a 24V battery (e.g., in a truck), it would be necessary to series-connect eight instead of four cells (8). The shown examples use metal plates (9) for mutual connection in series or in parallel. Fig. 12 shows an example with flat cells (47) inside the casing (46). For the flat cells, different methods of terminal connection are used.

The number of cells in parallel can be added as needed. If more current is required, more cells are added into parallel connection. In terms of monitoring and management, more cells in parallel are treated as one separate cell.

The battery cells (8) are mutually connected in parallel by metal plates (22, 19, 31, 33) and screws (32), or in series or parallel by other means. For example, the metal plate (22) connects at once three positive terminals (30) and three negative terminals (23) and thus simultaneously connects cells in series and parallel. The metal plates in the shown examples have relief holes (23, 24, 25). Through the metal plates (16, 19, 22) current flows from the battery cells (8) to the consumers and vice versa in case of charging. To each of the cells (8) a positive (29) and a negative (23) terminals are connected leading to the BMS. In that way, the BMS monitors the voltage of each cell.

The LCD screen (12) spends very little electricity and thus does not generate a significant cost that can shorten the battery's life. It displays data such as a cell temperature (43), a total voltage or a voltage of individual cells (44), a heating status (45) (ON/OFF), etc.

The battery management system is designed to keep the working temperature of the starter battery pack containing more battery cells (8) of lithium-ion; lithium-iron-phosphate cells mutually connected in series and parallel. The said system incorporates a unit (14) for cell temperature management and measurement, and voltage measurement of each individual battery cell (8), and for cell (8) heating management. The unit (14) generates in real time the temperature signals of the cells. The unit (14) incorporates the temperature sensor mounted directly on one of the cells (8), the screen (12) that displays cell temperature data (43), total voltage or individual cell voltage (44), and the heating status (45) of the cells (8). The said system contains data on the predefined upper temperature value t₂ and the lower temperature value t₁ and the push-button (34) for manual activation or deactivation of cell heating; where the working temperature of the battery cells (8) is kept up by a heater (28, 33) in the form of foil pasted over the cells, or in case of flat cells (8) by a heater in the form of flat foil placed in between the cells (8) or by a shared heater of any form inside the casing (1). All cavities between the adjacent battery cells (8) and the casing (1) and the battery cells (8) are filled with isolation foam, which prevents temperature loss from the battery pack. For heating the cells (8) the electric power of the cells (8) themselves is used. The upper temperature value t₂ amounts to 5 °C, and the lower temperature value t₁ 0 °C. However, in dependence on the characteristics of individual cells, other upper temperature t₂ and lower temperature t₁ values can be set.

A process for maintaining the working temperature of a battery management system for maintaining the working temperature of a starter battery pack containing two or more battery cells (8) of lithium-ion; lithium-iron-phosphate battery cells mutually connected in series and parallel, where the said system incorporates an unit (14) for cell temperature management and measurement, and voltage measurement of each individual battery cell (8) and for cell (8) heating management, which unit (14) in real time generates the temperature and voltage signals of the battery cells (8), wherein
- the unit (14) incorporates a temperature sensor mounted directly on one of the cells (8); a screen (12) displaying the cell temperature data (43), the total and/or individual cell voltage (44);
- furthermore, the said system contains data on a predefined upper temperature value t₂ and a lower temperature value t₁, and a push-button (34) for manual activation or deactivation of cell (8) heating;
- where the working temperature of the battery cells (8) is kept up by a heater (28, 23) in the form of foil pasted over the cells (8), or, in case of flat cells (8) by a heater in the form of flat foil placed in between the cells (8) or by a shared heater of any form inside the casing (1).

The working temperature maintenance process for the above described system involves the following steps:
- input of data on upper temperature t₂ and lower temperature t₁ values;
- input of data on permissible voltage drop value;
- input of time interval data to detect the non-use of the battery pack;
- checking whether the push-button (34) for cell heating activation or deactivation is pressed or not;
- if the push-button (34) is active, the heating status (45) of the battery cells (8) is changed and it is checked whether or not the heating function is on;
- if the heating function is on, what follows is temperature t' measurement of the battery cell (8) and generation of measured temperature *t'* signals;
- checking if the measured temperature *t*' is lower than the lower temperature value t₁, where, if the measured temperature *t*' is lower than the set temperature t₁, cell heating is activated; and
- heating the cells (8) and generating the signals in real time on temperature *t*' of the battery cells (8) until the cell temperature is equal to or higher than the higher temperature value t₂, after which cell heating is discontinued.

As far as known so far about the characteristics of the Li-ion battery cells, for their reliable work the lower temperature value t₁ should not go below 0 °C, although it is already at temperatures below 15 °C that they manifest poorer performance. However, in dependence on the characteristics of the cells (8), appropriate temperature values t₂ and t₁ are set. Furthermore, depending on outdoor conditions or depending on the use of the starter battery pack, the user manually deactivates the cell heating function with the push-button (34), thus preventing the discharging of the battery pack. After the cell heating is off, the voltage of all cells is checked.

In case of the non-use of the battery pack, aimed to save energy, the heating function is automatically switched off, where the non-use of the battery pack is detected by:
- periodical voltage measurement of the cells (8) according to a predefined time interval;
- calculating the voltage difference between two periodical measurements and by memorizing the voltage difference value,
- where, if the voltage difference value is smaller than the permissible voltage drop value, the non-use of the battery pack is detected.

If no voltage change has occurred outside the predefined permissible voltage difference value (for example, 1 V difference) over a time longer than, say, 48 hours, it means that the battery has not been used for a longer period of time.

With the push-button (34) on the cover (2) the user can manually activate or deactivate heating. If the user does not want to have the heating option activated, that option can be switched off by pressing the push-button (34), which makes sense if the car has been standing idle for a long time without being driven at low temperatures - in that case it may happen that as a result of cell heating the battery gets empty after a certain time, because electric power from the cells themselves is being used for cell heating. The unit (14) in step (108) checks if the push-button (34) is pressed or not. If pressed, the heating function status (109) will change. The unit (14) checks if the heating function is active (110). If it is, the unit (14) checks if the temperature of the battery cells (8) is higher than the adjusted limit (111). The limit (111) consists of data on the upper temperature value t₂ and the lower temperature value t₁. If the measured temperature t' of the cells (8) is lower than the temperature t₁ cell heating in step (112) will be activated. If the measured temperature t' of the cells (8) is higher than the temperature t₂, cell heating in step (113) will be deactivated and the process returns to the beginning of the loop and the first step is restarted - checking the cell voltage (101).

## Claims

1. A process for maintaining the working temperature of a battery management system for maintaining the working temperature of a starter battery pack containing two or more battery cells (8) of lithium-ion; lithium-iron-phosphate battery cells mutually connected in series and parallel, where the said system incorporates an unit (14) for cell temperature management and measurement, and voltage measurement of each individual battery cell (8) and for cell (8) heating management, which unit (14) in real time generates the temperature and voltage signals of the battery cells (8), **characterized in that**
- the unit (14) incorporates a temperature sensor mounted directly on one of the cells (8); a screen (12) displaying the cell temperature data (43), the total and/or individual cell voltage (44);
- furthermore, the said system contains data on a predefined upper temperature value t₂ and a lower temperature value t₁, and a push-button (34) for manual activation or deactivation of cell (8) heating;
- where the working temperature of the battery cells (8) is kept up by a heater (28, 23) in the form of foil pasted over the cells (8), or, in case of flat cells (8) by a heater in the form of flat foil placed in between the cells (8) or by a shared heater of any form inside the casing (1);
and it involves the following steps:
- input of data on the upper temperature value t₂ and the lower temperature value t₁;
- input of data on permissible voltage drop value;
- input of time interval data to detect the non-use of the battery pack;
- checking whether the push-button (34) for the activation or deactivation of cell heating is active or not;
- if the push-button (34) is active, the heating status (45) of the battery cells (8) will change and checking is done to determine if the heating function is on;
- if the heating function is on, temperature *t*' measurement of the battery cell (8) and signal generation on measured temperature *t'*;
- checking if the measured temperature t' is lower than the lower temperature value t₁, where, if the measured temperature t' is lower than the set temperature t₁, cell heating is activated; and
- heating the cells (8) and generating in real time the signals on temperature *t*' of each of the battery cells (8) until the cell temperature is equal to or higher than the upper temperature value t₂, after which cell heating is discontinued.

2. The process according to claim 1, **characterized in that** depending on external conditions or depending on the use of the starter battery pack, the user manually deactivates the cell heating function with the push-button (34), thus preventing the discharging of the battery pack in the event of non-use for a longer period of time.

3. The process according to claim 1, **characterized in that** after the cell heating is off, the voltage of all cells (8) is checked.

4. The process according to claim 2, **characterized in that** in the event of the non-use of the battery pack, aimed to save energy, the heating function is automatically switched off.

5. The process according to claim 4, **characterized in that** the non-use of the battery pack is detected by:
- periodical voltage measurement of the cells (8) according to a predefined time interval;
- calculating the voltage difference between two periodical measurements and by memorizing the voltage difference value,
where, if the voltage difference value is less than the permissible voltage drop value, the non-use of the battery pack is detected.

## Patentansprüche

1. Prozess zur Aufrechterhaltung der Arbeitstemperatur eines Batteriemanage-mentsystems zur Aufrechterhaltung der Arbeitstemperatur eines Starterbatteriesatzes, der zwei oder mehr (8) Lithium-Ionen-Batteriezellen, Lithium-Eisen-Phosphat-Batteriezellen in Reihen- und Parallelschaltung enthält, wobei das System eine Einheit (14) für die Zellentemperaturverwaltung und -messung und die Spannungsmessung jeder einzelnen Batteriezelle (8) sowie für die Zellenheizung (8) enthält, und die Einheit (14) in Echtzeit die Temperatur- und Spannungssignale der Batteriezellen (8) erzeugt, **dadurch gekennzeichnet**
- Die Einheit (14) einen Temperatursensor hat, der direkt an einer der Zellen (8) angebracht ist, sowie eine Anzeige (12), welche die Zellentemperaturdaten (43), die Gesamt- und/oder Einzelzellenspannung (44) anzeigt;
- Darüber hinaus enthält das System Daten über einen vorgegebenen oberen Temperaturwert t₂ und einen niedrigeren Temperaturwert t₁ und einen Druckknopf (34) zur manuellen Aktivierung oder Deaktivierung der Zellenheizung (8);
- Die Arbeitstemperatur der Batteriezellen (8) von einem Heizer (28, 23) in Form von einer über die Zellen (8) verklebten Folie, oder bei flachen Zellen (8) durch eine Heizeinrichtung in Form von einer flachen zwischen den Zellen (8) angeordneten Folie aufrechterhalten wird, bzw. durch eine gemeinsame Heizeinrichtung beliebiger Form innerhalb des Gehäuses (1);
Die folgenden Schritte sind gegeben:
- Eingabe von Daten über den oberen Temperaturwert t₂ und den niedrigeren Temperaturwert t₁;
- Eingabe von Daten über den zulässigen Spannungsabfallwert;
- Eingabe von Zeitintervalldaten zur Erkennung der Nichtbenutzung des Batteriesatzes;
- Prüfen, ob der Taster (34) für die Aktivierung oder Deaktivierung der Zellenheizung aktiv ist oder nicht;
- Wenn der Taster (34) aktiv ist, ändert sich der Heizzustand (45) der Batteriezellen (8) und es wird geprüft, ob die Heizfunktion eingeschaltet ist;
- Wenn die Heizfunktion eingeschaltet ist, erfolgt die Messung der Temperatur *t*' der Batteriezelle (8) und die Erzeugung des Signals über die gemessene Temperatur *t'*;
- Prüfen, ob die gemessene Temperatur *t*' niedriger als der niedrigere Temperaturwert t1 ist, wobei bei einer gemessenen Temperatur *t*' kleiner als die eingestellte Temperatur t1 die Zellenheizung aktiviert wird; sowie
- Heizung der Zellen (8) und Erzeugen der Signale über die Temperatur *t*' jeder Batteriezelle (8) in Echtzeit, bis die Zellentemperatur gleich oder höher als der obere Temperaturwert t₂ ist, woraufhin die Zellenheizung abgeschaltet wird.

2. Prozess nach Anspruch 1, **dadurch gekennzeichnet dass** der Benutzer in Abhängigkeit von den äußeren Bedingungen oder abhängig von der Verwendung des Starterbatteriesatzes die Zellenheizfunktion mit dem Druckknopf (34) manuell deaktiviert und somit die Entladung des Batteriesatzes im Falle längerer Nichtbenutzung verhindert.

3. Prozess nach Anspruch 1, **dadurch gekennzeichnet dass** nach dem Ausschalten der Zellenheizung die Spannung aller Zellen (8) überprüft wird.

4. Prozess nach Anspruch 2, **dadurch gekennzeichnet dass** bei Nichtbenutzung des Batteriesatzes, um Energie zu sparen, die Heizfunktion automatisch abgeschaltet wird.

5. Prozess nach Anspruch 4, **dadurch gekennzeichnet dass** die Nichtbenutzung des Batteriesatzes erkannt wird durch:
- Periodische Spannungsmessung der Zellen (8) nach einem vorgegebenen Zeitintervall;
- Berechnung der Spannungsdifferenz zwischen zwei periodischen Messungen und Speichern des Spannungsdifferenzwertes,
Wobei, wenn der Spannungsdifferenzwert kleiner als der zulässige Spannungs-abfallwert ist, die Nichtbenutzung des Batteriesatzes erkannt wird.

## Revendications

1. Procédé de maintien de la température de fonctionnement d'un système de gestion de batterie (BMS) en vue de maintenir la température de fonctionnement d'une batterie de démarrage comprenant deux cellules ou plus au lithium-ion (8) ; cellules LFP (lithium fer phosphate) reliées en série et en parallèle où ledit système comprend une unité (14) de gestion et de mesure de la température des cellules, de mesure de la tension de chaque cellule (8) séparément et de gestion de la température des cellules, les signaux de température et de tension des cellules (8) étant générés en temps réel par l'unité (14), **caractérisé en ce que**
- l'unité (14) inclut un capteur de température monté directement sur l'une des cellules (8) ; un écran (12) affichant les données relatives à la température (43) des cellules et à la tension (44) des cellules, séparément ou au total ;
- ledit système inclut en outre des données sur une valeur prédéfinie de température maximale t₂ et une valeur de température minimale t₁ ainsi qu'un bouton-poussoir (34) pour activation ou désactivation manuelle du chauffage de la cellule (8) ;
- la température de fonctionnement des cellules (8) est maintenue par un élément de chauffe (28, 23) sous forme de film posé sur les cellules (8) ou bien, en cas de cellules plates (8), par un élément de chauffe sous forme de film placé entre les cellules (8) ou encore par un élément chauffant commun, de n'importe quelle forme et placé dans le boîtier (1) ;
et comprenant les étapes suivantes:
- entrée des données relatives aux valeurs de température maximale t₂ et température minimale t₁;
- entrée des données relatives à la valeur admissible de chute de tension;
- entrée des données d'intervalle de temps relatif à la détection de non-utilisation de la batterie ;
- vérification du bouton-poussoir (34) pour l'activation/désactivation du chauffage des cellules pour voir s'il est actif ou non ;
- si le bouton-poussoir (34) est actif, le statut thermique (45) des cellules (8) sera modifié et vérifier que la fonction chauffage est bien activée ;
- si la fonction chauffage est active, mesure de la température *t*' de la cellule (8) et génération du signal de température mesurée *t*' ;
- vérifier que si la température mesurée *t*' est inférieure à la valeur de température minimale t₁ et, au cas où la température mesurée *t*' serait inférieure à la température prédéterminée t₁, activer le chauffage des cellules ; et
- chauffer les cellules (8) et générer en temps réel les signaux de température *t*' de chacune des cellules (8) de la batterie jusqu'à ce la température des cellules soit égale ou supérieure à la valeur de température maximale t₂, à la suite de quoi le chauffage des cellules est arrêté.

2. Procédé selon la revendication 1, **caractérisé en ce que** en fonction des conditions extérieures ou selon l'utilisation de la batterie de démarrage, l'utilisateur peut désactiver manuellement la fonction chauffage des cellules à l'aide du bouton-poussoir (34), permettant ainsi d'éviter que la batterie ne se décharge au cas où elle ne serait pas utilisée pendant une période prolongée.

3. Procédé selon la revendication 1, **caractérisé en ce que** la tension de toutes les cellules (8) est vérifiée une fois le chauffage des cellules déconnecté.

4. Procédé selon la revendication 2, **caractérisé en ce que** la fonction chauffage est automatiquement coupée lorsque la batterie est inutilisée, permettant ainsi d'économiser de l'énergie.

5. Procédé selon la revendication 4, **caractérisé en ce que** la non-utilisation de la batterie est détectée par :
- la mesure périodique de la tension des cellules (8) selon l'intervalle de temps prédéfini;
- le calcul de la différence de tension entre deux mesures périodiques et par la mémorisation de cette différence de valeur de la tension,
la non-utilisation de la batterie étant détectée lorsque la différence de valeur de la tension est inférieure à la valeur admissible de chute de tension.
